(19) Europäisches Patentamt
European Patent Office
Office européen des brevets

(11) **EP 1 639 551 B1**

(12) **FASCICULE DE BREVET EUROPEEN**

(45) Date de publication et mention
de la délivrance du brevet:
**12.12.2007 Bulletin 2007/50**

(21) Numéro de dépôt: **04767857.8**

(22) Date de dépôt: **28.06.2004**

(51) Int Cl.:
***G06T 11/00*** *(2006.01)*

(86) Numéro de dépôt international:
**PCT/FR2004/050295**

(87) Numéro de publication internationale:
**WO 2005/001775 (06.01.2005 Gazette 2005/01)**

(54) **PROCEDE DE RECONSTRUCTION D'UNE IMAGE TOMOGRAPHIQUE PAR UNE METHODE ANALYTIQUE COMPRENANT UNE MODELISATION AMELIOREE DU MOUVEMENT DE L'OBJET**

VERFAHREN ZUR TOMOGRAPHIEBILDREKONSTRUKTION UNTER VERWENDUNG EINES ANALYTISCHEN PROZESSES UNTER VERWENDUNG EINER VERBESSERTEN MODELLIERUNG DER BEWEGUNG DES OBJEKTS

METHOD FOR TOMOGRAPHIC IMAGE RECONSTRUCTION USING AN ANALYTICAL PROCESS INVOLVING IMPROVED MODELLING OF THE MOVEMENT OF THE OBJECT

(84) Etats contractants désignés:
**AT BE BG CH CY CZ DE DK EE ES FI FR GB GR HU IE IT LI LU MC NL PL PT RO SE SI SK TR**

(30) Priorité: **27.06.2003 FR 0307848**

(43) Date de publication de la demande:
**29.03.2006 Bulletin 2006/13**

(73) Titulaires:
• **COMMISSARIAT A L'ENERGIE ATOMIQUE**
**75015 Paris (FR)**
• **CENTRE NATIONAL DE**
**LA RECHERCHE SCIENTIFIQUE (CNRS)**
**75794 Paris Cedex 16 (FR)**
• **UNIVERSITE JOSEPH FOURIER DE GRENOBLE**
**38041 Grenoble Cedex 9 (FR)**

(72) Inventeurs:
• **ROUX, Sébastien**
**69100 VILLEURBANNE (FR)**
• **KOENIG, Anne**
**F-38410 Saint-Martin d'Uriage (FR)**
• **DESBAT, Laurent**
**F-38000 Grenoble (FR)**

• **GRANGEAT, Pierre**
**F-38330 Saint Ismier (FR)**

(74) Mandataire: **Poulin, Gérard et al**
**Société BREVATOME**
**3, rue du Docteur Lancereaux**
**75008 Paris (FR)**

(56) Documents cités:
**US-A- 5 475 726** **US-A- 6 151 377**

• **LIN W ET AL: "VISUALIZATION OF CARDIAC DYNAMICS USING PHYSICS-BASED DEFORMABLE MODEL" PROCEEDINGS OF THE SPIE, SPIE, BELLINGHAM, VA, US, vol. 3976, 15 février 2000 (2000-02-15), pages 210-217, XP008019251 ISSN: 0277-786X**
• **G. VERLY, JACQUES: "Effects of Arbitrary Focal Spot Intensity Distribution, Detector Width, and Scanning Eccentricity in X-Ray Computed Tomography" IEEE TRANSACTIONS ON ACOUSTICS, vol. 29, no. 1, février 1981 (1981-02), XP001091434**

**EP 1 639 551 B1**

**Description**

Le sujet de cette invention est un procédé de reconstruction d'une image tomographique, du genre analytique et dans lequel on recourt à une modélisation perfectionnée du mouvement de l'objet afin de réduire les artéfacts de l'image.

La reconstruction d'images en tomographie implique l'utilisation d'un rayonnement traversant l'objet. Dans de nombreux cas, le rayonnement est un rayonnement d'irradiation partiellement atténué par les points de l'objet qu'il traverse ; il arrive aussi que les lignes de rayonnement soient fictives et correspondent simplement à des lignes de collimation des détecteurs, qui enregistrent une émission de particules dans l'objet. Les premiers de ces procédés sont les procédés radiographiques, et les autres des procédés émissifs, réservés plutôt aux êtres vivants et dans lesquels le rayonnement est produit par un corps émissif qu'ils ont absorbé auparavant. Quoique les deux familles de procédés soient complètement différentes, la plupart des procédés de reconstruction d'images s'appliquent aux deux, et c'est le cas aussi de l'invention.

Un rayonnement divergeant est souvent préféré pour englober plus facilement l'objet étudié. Dans le cas d'un rayonnement d'irradiation atténué par l'objet, on y parvient en disposant une source émissive à un foyer ponctuel près de l'objet et un réseau de détecteurs du côté opposé de l'objet, qui sont tous collimatés vers la source ; dans le cas d'un rayonnement émis par l'objet, un réseau similaire de détecteurs est mis en collimation vers un foyer qui correspond géométriquement à la source ponctuelle précédente, mais à aucun objet matériel. Dans tous les cas, le foyer et le réseau de détecteurs sont déplacés autour de l'objet en en prenant des vues successives, et pour chacune des vues, les détecteurs mesurent des sommes de la propriété d'atténuation ou d'émission le long de lignes de collimation, qu'on appelle des projections de l'image de l'objet. Quand un nombre suffisant de vues a été pris, on dispose d'un grand nombre de projections s'entrecroisant à travers l'objet. Le problème mathématique dit d'inversion du système permet d'obtenir la propriété d'atténuation ou d'émission, qui sert à former l'image, à chacun des points de l'objet à partir des sommes de propriétés sur les projections. Il peut être représenté par un système linéaire d'équations où les valeurs connues au départ sont les mesures prises par les détecteurs aux différents emplacements et les inconnues sont les valeurs de la propriété aux différents points de l'objet. Certaines méthodes de reconstruction dites algébriques reviennent effectivement à une inversion de ce système ; il existe cependant d'autres méthodes dites analytiques, où la valeur de la propriété à chaque point est calculée directement à partir d'une combinaison mathématique des projections. L'invention est l'une d'entre elles.

Un domaine privilégié de la tomographie est l'étude des être vivants pour la médecine. Comme plusieurs vues successives doivent être prises, l'objet étudié est susceptible de se déplacer entre elles selon une loi générale d'évolution. Les différentes vues représentent donc des états différents de l'objet, et des artéfacts de reconstruction ne peuvent qu'apparaître sur l'image reconstruite.

Des procédés pour échapper à ce problème permanent consistent à prendre toutes les vues à la fois avec autant de sources et de réseaux de détecteurs, ou à ne prendre des vues de l'objet qu'à des états identiques de celui-ci, ce qui est possible si son mouvement est périodique comme le sont certaines activités physiologiques comme les battements du coeur ou la respiration ; le premier de ces procédés est cependant dispendieux et le second est délicat à mettre en oeuvre convenablement.

C'est pourquoi on a aussi entrepris d'incorporer des modèles numériques du mouvement de l'objet reflétant la loi générale d'évolution de l'objet dans le procédé de reconstruction. Le modèle revient généralement à une collection de champs de déplacements des points de l'objet aux instants respectifs où les vues sont prises. Il peut être établi par d'autres mesures ou par certaines hypothèses. Plusieurs genres de modèles ont déjà été proposés, mais ils présentent en général des insuffisances. C'est ainsi que le brevet US A 5 287 276, appliqué à l'étude de la cage thoracique, considère les translations et les dilatations de son contenu, mais ce modèle est insuffisant pour d'autres mouvements comme celui du coeur, qui comprend une torsion. De plus, les jeux de projections utilisés pour appliquer la formule d'inversion ne sont pas connus rigoureusement, ce qui peut permettre de nouveaux artefacts.

Le procédé de l'invention présente les avantages d'utiliser un modèle plus élaboré mais aussi très simple du mouvement de l'objet, comprenant de nouvelles classes de mouvements, et de recourir à une formule d'inversion nouvelle et parfaitement exacte.

De plus, il est facile d'obtenir les jeux de projections nécessaires et seulement nécessaires à la reconstruction des points de l'image.

Des généralisations à des situations plus complexes sont aussi proposées.

L'invention concerne sous sa forme générale un procédé de reconstruction d'une image tomographique d'un objet mobile et déformable, l'image étant un ensemble de valeurs d'une propriété prises par l'objet à une collection de points de l'objet, comprenant l'emploi : d'un rayonnement divergent à partir d'un foyer et traversant l'objet, le foyer étant mobile autour de l'objet ; d'un modèle analytique de mobilité et de déformation de l'objet défini pour chaque position du foyer ; et d'un procédé de calcul analytique pour obtenir lesdites valeurs à partir de sommes des valeurs de la propriété le long de lignes de projection menant au foyer et passant respectivement par les points ; caractérisé en ce que le modèle est affine, et est une combinaison variable en cours d'acquisition, cette combinaison comprenant des translations, des rotations et des homothéties de l'objet à partir d'une origine, et en ce que le procédé de calcul analytique comprend les étapes suivantes :

- pondération des mesures, cette pondération étant dépendante du modèle analytique de mobilité et de déformation de l'objet ;
- dérivation des mesures pondérées suivant la trajectoire du foyer en considérant une direction adaptée au modèle, cette direction étant maintenue constante, et obtention de mesures modifiées ;
- rétroprojection des mesures modifiées.

Avant la pondération, un filtrage des mesures acquises par un filtre de Hilbert est souvent appliqué, ainsi qu'il est usuel dans d'autres procédés. La pondération et la dérivation s'appliquent alors aux mesures filtrées.

Les figures suivantes sont introduites pour l'explication de l'invention :

- la figure 1 illustre la prise des mesures de l'objet étudié,
- la figure 2 illustre une représentation équivalente, l'objet étant maintenu à un état de référence,
- les figures 3a, 3b, et 3c illustrent un cas complexe de déformation de l'objet,
- la figure 4 est analogue à la figure 2 dans le cas complexe,
- la figure 5 illustre une prise de mesures avec un rayonnement conique,
- et les figures 6, 7 et 8 sont des organigrammes de trois modes de réalisation de l'invention.

On aborde maintenant les figures. La première d'entre elles illustre la situation classique en tomographie d'une source S de rayonnement et d'un réseau de détecteurs D mobile de concert sur des trajectoires circulaires concentriques à des positions opposées autour d'un objet E à étudier. Des rayons R joignent la source S aux détecteurs respectifs du réseau D. On considère ici un problème géométrique plan, qui correspond aux conditions de mesures dites en éventail parallèle où l'étude de l'objet E est faite par tranches superposées. Les procédés impliquant un rayonnement conique sont aussi usuels et seront examinés plus loin. L'invention a été conçue pour des rayonnements divergents en général, qui englobent aussi ces derniers.

La trajectoire T de la source S et l'ouverture du faisceau de rayonnement sont généralement choisies pour que celui-ci englobe toute la section de l'objet E.

Considérons un point P de l'objet E. Un rayon unique provenant de la source S le traverse quand une vue est prise, et d'autres rayons R2, R3, etc. le traversent de même pour d'autres positions S2, S3, etc. de la source S quand d'autres vues sont prises. Ces rayons passant par le point P sont utilisés pour déterminer l'image du point P dans le procédé d'inversion. Il est utile que les rayons considérés soient orientés dans des directions aussi variées que possible, de façon à décrire toutes les directions de droite possibles pour chaque point de l'objet E.

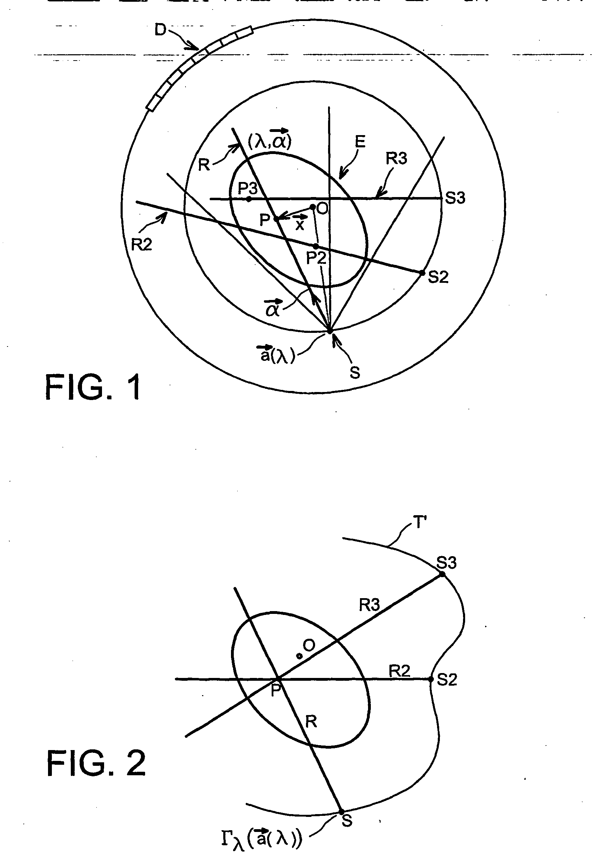

Considérons maintenant que l'objet E se déplace et se déforme. Le point P se déplace à l'intérieur de la trajectoire T et les rayons R2, R3, etc. à employer passent par des positions respectives P2, P3, etc. distinctes du point P d'origine. Le problème de reconstruction à résoudre est identique à la configuration fictive de la figure 2, où le point P a été pris comme référence immobile et où tout se passe comme si la source S suivait une trajectoire T' de forme irrégulière et à la définition numérique notée par $\overrightarrow{OS}=\Gamma_\lambda\,(\vec{a}(\lambda))$ (et $\vec{a}(\lambda)$ dans la configuration réelle de la figure 1). On verra -que--cette représentation--fictive du problème aide à sa compréhension. D'après l'invention, le modèle de déplacement et de déformation qu'on choisit pour l'objet E est affine, composé par exemple d'une combinaison variable en cours d'acquisition de translations, de rotations et d'homothéties, conformément à la formule (1)

$$\vec{x}_0 \;=\; \Gamma_\lambda\!\left(\vec{x}\right) \;=\; A_\lambda \vec{x} + B_\lambda \;=\; \begin{bmatrix} a_{11}(\lambda) & a_{12}(\lambda) \\ a_{21}(\lambda) & a_{22}(\lambda) \end{bmatrix} \vec{x} + \begin{bmatrix} b_1(\lambda) \\ b_2(\lambda) \end{bmatrix} \qquad (1)$$

où $\vec{x}_0$ est la position vectorielle du point P par rapport à une référence telle que le point O à l'instant de référence choisi pour mener les calculs et la reconstruction de l'image, $\vec{x}$ est la position du point P à un autre instant et notamment un instant de prise de vue, et les coefficients a et b dépendent du temps. $\lambda$ est un paramètre général du procédé, qui varie entre une valeur minimal $\lambda$ min et une valeur maximale $\lambda$ max ; le temps est repéré par une fonction monotone de $\lambda$ (éventuellement par $\lambda$ lui-même). L'instant de référence où l'image est reconstruite correspond à $\lambda=0$. La propriété d'atténuation ou d'émission à calculer est notée f, et pour le point P qu'on a repéré par le vecteur $\vec{x}$ on la note $f_\lambda(\vec{x})$ à un instant $\lambda$ quelconque et $f_0(\vec{x}_0)$ à l'instant de référence, où $\vec{x}$ est noté $\vec{x}_0$.

La valeur d'une projection de la propriété mesurée sur tout un rayon R allant de la sources à un détecteur du réseau D à travers l'objet E est donnée par la formule (2), où $\vec{\alpha}$ est un vecteur unitaire, et on note cette projection en fonction de ce vecteur unitaire $\vec{\alpha}$ et du paramètre $\lambda$ :

$$g_\lambda\left(\lambda,\vec{\alpha}\right)=\int_R dt f_\lambda\left(\vec{a}(\lambda)+t\vec{\alpha}\right) \qquad (2)$$

où t est un paramètre exprimant la progression sur le rayon de la projection et prenant les valeurs comprises dans l'ensemble des réels positifs R.

Il est habituel d'appliquer un filtre de Hilbert aux projections dans les méthodes analytiques, ce qu'on fait ici aussi, et les projections filtrées sont notées gH$\lambda$ selon la formule (3)

$$g_{H\lambda}(\lambda,\vec{n})=-\int_{S^1} d\vec{\alpha}\, h_H(\vec{n}.\vec{\alpha})g_\lambda(\lambda,\vec{\alpha}), \qquad (3)$$

Où $\vec{n}$ est un -vecteur quelconque, $S^1$ est la sphère - unité en bidiménsionnel, $h_H$ est donné par la formule (4)

$$h_H(s)=-\int_{-\infty}^{+\infty} d\sigma\, i\,\mathrm{sign}(\sigma)e^{2i\pi\sigma s}. \qquad (4)$$

L'homme du métier pourra utiliser pour réaliser ces formules soit une opération classique de convolation discrète qui fera intervenir une version discrétisée du filtre de Hilbert, soit une opération de multiplication dans le domaine de Fourier, qui fera intervenir une version apodisée de la Transformée de Fourier du filtre de Hilbert.

Les inventeurs ont établi en outre la relation suivante (5)

$$g_{H\lambda}(\lambda, A_\lambda^T\vec{n})=\frac{1}{|\det A_\lambda|}P_{oH}(\vec{n}.\Gamma_\lambda(\vec{a}(\lambda))), \qquad (5)$$

où le produit matrice-vecteur $A_\beta^T\vec{n}$ est la direction orthogonale à la droite de projection à l'instant $\lambda$ passant par le point mobile correspondant au point P, $\vec{n}$ est encore un vecteur quelconque et où $P_{oH}$ désigne des projections parallèles $P_{OH}$ ($\vec{n}$, s), obtenues par réarrangement des projections effectivement mesurées sur l'objet à l'état de référence et filtrées par le filtre de Hilbert d'après la formule suivante (6)

$$P_{OH}(\vec{n},s)=\int_R ds'P_o(\vec{n},s')h_H(s-s'), \qquad$$

s étant un paramètre donnant la distance à l'origine.

La formule d'inversion pratiquée est alors la formule suivante (7)

$$f_o(\vec{x}_O)=\int_{\Lambda^\Gamma(\vec{x}_O)} d\lambda\, \frac{1}{\|\vec{x}_0-\Gamma_\lambda(\vec{a}(\lambda))\|}\, g_{H\lambda}(\lambda, A_\lambda^T\vec{n}*)$$

où $\vec{n}^*$ désigne un vecteur unitaire orthogonal à un rayon reliant le point P considéré à la source S dans la représentation de la figure 2, et où $g_{F\lambda}$ est donné dans la formule suivante (8)

$$g_{F\lambda}\left(\beta, A_\beta^T \vec{n}\right) = \frac{\partial}{\partial\beta}\left\{\det A_\beta \left| g_{H\beta}\left(\beta, A_\beta^T \vec{n}\right)\right.\right\} = \frac{\partial}{\partial\beta}\left\{\frac{\left|\det A_\beta\right|}{\left\|A_\beta^T \vec{n}\right\|} g_{H\beta}\left(\beta, \frac{A_\beta^T \vec{n}}{\left\|A_\beta^T \vec{n}\right\|}\right)\right\}$$

L'homme du métier pourra utiliser une méthode de différence finie sur deux ou trois points pour réaliser cette étape de dérivation.

Cette dérivation s'effectue suivant le paramètre $\lambda$ de la trajectoire du foyer (la source S). Elle est spécifiquement adaptée au modèle affine de déformation et de mobilité car elle s'applique sur une direction $A_\beta^T \vec{n}$ en considérant que la direction $\vec{n}$ est maintenue constante. Il s'agit donc de maintenir constant, non pas la direction orthogonale à un rayon acquis, mais la direction orthogonale au rayon équivalent de la géométrie fictive.

$A_\beta^T \vec{n}$ est la direction orthogonale à la droite de projection à l'instant $\lambda$ passant par le point mobile correspondant au point P.

Cette formule d'inversion tient compte des déformations de l'objet E et comporte, par rapport à d'autres formules, établies dans des cas ordinaires, une pondération en fonction de la déformation de l'objet- (par le déterminant de $A_\lambda$) et de la position de la trajectoire (par la norme entre $\vec{x}_0$ et $\Gamma_\lambda(a(\lambda))$). Ces conditions peu contraignantes s'expliquent parce que, avec un espace affine de transformation, les droites de projection de la figure 1 restent des droites dans la géométrie fictive de la figure 2, de sorte que le problème numérique peut être résolu analytiquement.

Dans la formule (7)

$$f_0(\vec{x}_0) = \int_{\Lambda^\Gamma(\vec{x}_0)} d\lambda \frac{1}{\left\|\vec{x}_0 - \Gamma_\lambda\left(\vec{a}(\lambda)\right)\right\|} g_{F\lambda}(\lambda, A_\lambda^T \vec{n}^*),$$

les bornes de l'intégrale $\Lambda^\Gamma(\vec{x}_0)$ désignent un ensemble minimal de positions $\lambda$ de la source S tel que sur l'objet E à l'état de référence les directions dés droites reliant $\vec{x}_0$ à $\Gamma_\lambda(\vec{a}(\lambda))$ couvrent tout l'intervalle d'un demi-tour de trajectoire sans redondance. Si on prend soin de limiter ainsi l'intégrale, la formule de reconstruction est parfaite. L'intégrale de la formule (7) pourra être classiquement discrétisée par l'homme de métier par une formule des trapèzes.

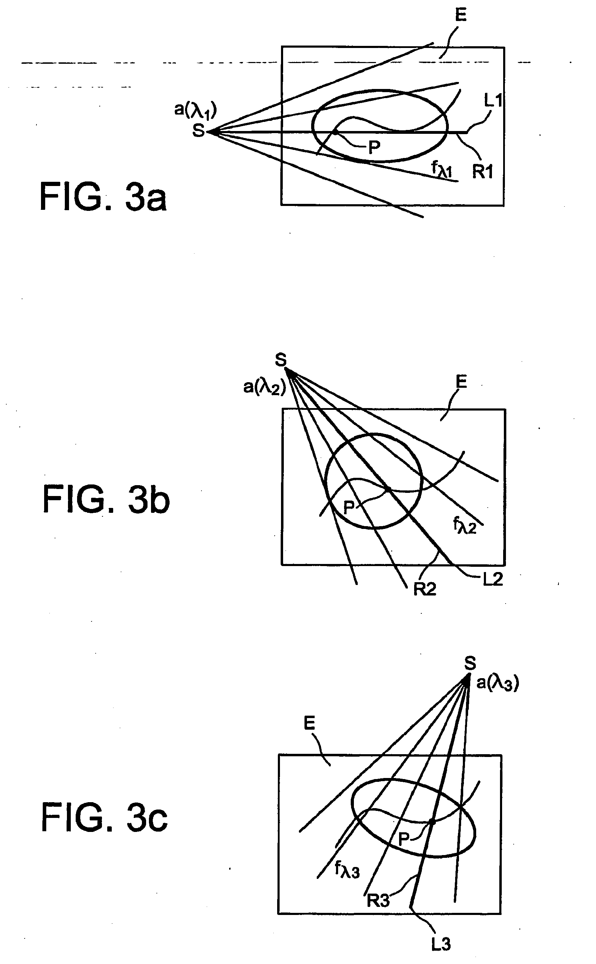

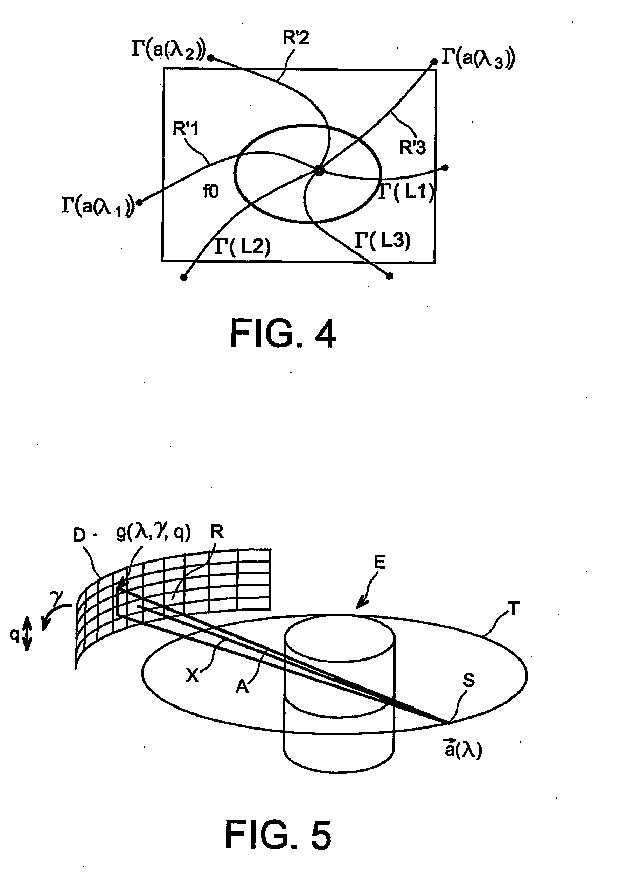

Il est manifeste que les déformations affines ne suffisent pas à modéliser tous les objets qu'on peut devoir étudier dans la pratique. Refaisant le raisonnement des figures 1 et 2, on donne les figures 3a, 3b, 3c, et 4. L'objet E évolue de façon complexe entre les positions indiquées successivement aux états $\lambda 1$, $\lambda 2$ et $\lambda 3$ où la position de la source S a aussi été indiquée de même que le rayon R1, R2 ou R3 menant au point P.

En remettant l'objet E dans un état de référence, la figure 4 montre que les rayons notés R'1, R'2 et R'3 menant au point P et correspondant aux rayons R1, R2 et R3 (passant par les mêmes points de l'objet E) ne sont plus rectilignes. La formule (7)

$$f_0(\vec{x}_0) = \int_{\Lambda^\Gamma} d\lambda \frac{1}{\left\|\vec{x}_0 - \Gamma_\lambda\left(\vec{a}(\lambda)\right)\right\|} g_{F\lambda}(\lambda, A_\lambda^T \vec{n}^*)$$

n'est alors plus valable directement. On s'y ramène toutefois par des approximations, en supposant une déformation affine de l'objet E particulière à chaque point P et valable autour de lui. On calcule alors la matrice de déformation correspondant à $A_\lambda$ de la formule (1)

$$\vec{x}_0 = \Gamma_\lambda(\vec{x}) = A_\lambda \vec{x} + B_\lambda = \begin{bmatrix} a_{11}(\lambda) & a_{12}(\lambda) \\ a_{21}(\lambda) & a_{22}(\lambda) \end{bmatrix} \vec{x} + \begin{bmatrix} b_1(\lambda) \\ b_2(\lambda) \end{bmatrix}$$

par la formule (9)

$$A_\beta\left(\Gamma^{-1}\left(\vec{x_0}\right)\right) = \begin{bmatrix} \dfrac{\partial}{\partial x_1}\Gamma_{x1}\left(\beta,\Gamma^{-1}\left(\vec{x_0}\right)\right) & \dfrac{\partial}{\partial x_2}\Gamma_{x1}\left(\beta,\Gamma^{-1}\left(\vec{x_0}\right)\right) \\ \dfrac{\partial}{\partial x_1}\Gamma_{x2}\left(\beta,\Gamma^{-1}\left(\vec{x_0}\right)\right) & \dfrac{\partial}{\partial x_2}\Gamma_{x2}\left(\beta,\Gamma^{-1}\left(\vec{x_0}\right)\right) \end{bmatrix}$$

où $\Gamma_{x1}(\lambda, \vec{x})$ et $\Gamma_{x2}(\lambda,\vec{x})$ sont les composantes suivant les directions x1 et $x_2$ principales de $\Gamma(\lambda,\vec{x})$. $B_\lambda$ n'a pas besoin d'être calculé. Les déplacements estimés de tous les points de l'objet E sont donc les coefficients $\Gamma(\lambda, \vec{x})$ qui peuvent concrètement être introduits dans des cartes de déplacement qui sont lues et exploitées au moment de l'inversion.

A chaque point P, il faudra encore déterminer l'ensemble de projections $\Lambda^\Gamma(\vec{x_0})$ qui seront utilisées pour l'inversion, selon le principe précédent qu'un intervalle angulaire d'un demi-tour doit être couvert par ces projections. Comme les rayons de la géométrie fictive R'1, R'2 et R'3, etc. ne sont plus rectilignes, on considère plutôt les directions de leur tangente au point P d'intersection.

La formule d'inversion peut alors s'écrire selon la formule (10)

$$f_o \approx \int_{\Lambda^\Gamma(\vec{x_0})} d\lambda \, \frac{1}{L\left(\vec{x}0 - \Gamma_\lambda\left(\vec{\vec{a}}(\lambda)\right)\right)} g_{F\lambda}\left(\lambda, \vec{n}\left(\Gamma^{-1}\left(\vec{x}0\right),\lambda\right)\right),$$

où $g_{F\lambda}$ est exprimé par la formule (11)

$$g_{F\lambda}\left(\lambda, \vec{n}\left(\Gamma^{-1}\left(\vec{x_0}\right),\lambda\right)\right) = \frac{\partial}{\partial \lambda}\left\{\frac{\left|\det A_\lambda\left(\Gamma^{-1}\left(\vec{x_0}\right)\right)\right|}{\beta\left(\vec{n}\left(\Gamma^{-1}\left(\vec{x_0}\right),\lambda\right)\right)}\right\} g_{H\lambda}\left(\lambda, \vec{n}\left(\Gamma^{-1}\left(\vec{x_0}\right),\lambda\right)\right).$$

De plus, $\vec{n}(\Gamma^{-1}(\vec{x_0}), \lambda)$ est la direction orthogonale à la droite acquise à l'instant $\lambda$ passant par $\Gamma^{-1}(x_0)$ ; $\beta(\vec{n}(\Gamma^{-1}(\vec{x_0}), \lambda))$ est un facteur lié à la déformation des longueurs sur les rayons, d'après la formule (12)

$$\beta\left(\vec{n}\left(\Gamma^{-1}\left(\vec{x_0}\right),\beta\right)\right) = \left\| A_\beta^{-T}\left(\Gamma^{-1}\left(\vec{x_0}\right)\right)\left(\frac{A_\beta^{-T}\left(\Gamma^{-1}\left(\vec{x_0}\right)\right)\vec{n}\left(\Gamma^{-1}\left(\vec{x_0}\right),\beta\right)}{\left\|A_\beta^{-T}\left(\Gamma^{-1}\left(\vec{x_0}\right)\right)\vec{n}\left(\Gamma^{-1}\left(\vec{x_0}\right),\beta\right)\right\|}\right)\right\|.$$

Enfin, L $(\vec{x_0}-\Gamma_\lambda(\vec{a}(\lambda)))$ est la distance du point P à l'image de la source sur l'objet de référence, le long du rayon virtuel R'.

Au détriment de la qualité, mais au profil d'une plus grande simplicité,

- le terme $L(\vec{x_o}-\Gamma(\vec{a}(1)))$ peut être remplacé par

$$-\left\|\vec{x}_o - \Gamma_\lambda\left(\vec{a}(\lambda)\right)\right\| \cdot$$

- le terme.

$$\frac{\left|\det A_\lambda\left(\Gamma^{-1}(\vec{x}o)\right)\right|}{\left|\beta\left(\vec{m}\left(\Gamma^{-1}(\vec{x}o),\lambda\right)\right)\right|}$$

par 1.

Le modèle affine peut être défini d'après les déformation réelles de l'objet par une approximation d'après un critère d'approximation tel le critère des moindres carrés, le critère de la minimisation de la norme $L^1$ et $L^2$, éventuellement complétés par une régularisation sur le gradient ou le laplacien,

On s'est intéressé jusqu'ici à des reconstructions de l'objet E par tranches, dans des conditions en éventail parallèle. Le procédé précédent peut être étendu avec des acquisitions par un rayonnement conique dans les conditions classiques de la figure 5, où l'objet E est représenté dans son entièreté tridimensionnelle, de même que le réseau de détecteurs D, qui est composé d'une série de couches de détecteurs semblables chacune à celle des figures précédentes ; un rayon R peut être exprimé par trois paramètres, à savoir la position $\lambda$ de la source S, un angle $\gamma$ que fait le rayon R dans le plan de la trajectoire T par rapport à l'axe central X du faisceau, et une cote q repérant la couche de détecteurs à laquelle le rayon aboutit. L'angle $\gamma$ remplace le vecteur de direction $\vec{\alpha}$ précédemment utilisé dans les formules par commodité.

La formule suivante (13)

$$f_0^\#\left(\vec{x}_0\right)= \int_{\Lambda^\Gamma(\vec{x}_0)} d\lambda\, \frac{1}{L\left(\vec{x}_0 - \Gamma_\lambda\left(\vec{a(\lambda)}\right)\right)} g_{FA}\left(\lambda,\vec{n}\left(\Gamma^{-1}(\vec{x}_0),\lambda\right),q\left(\lambda,\Gamma_z^{-1}\vec{x}o\right)\right)$$

donne l'inversion qu'on entreprend alors dans ces conditions géométriques particulières et en faisant une approximation appelée de Feldkamp courante dans l'art pour traiter les projections coniques. Les mesures sont ici multipliées par cos A, qui est la pondération classique compensant le caractère oblique du rayon acquis. Cet angle A est donné sur la figure 5 et représente l'angle du rayon R avec le plan de la trajectoire T. De plus, $L(\vec{x}_0 - \Gamma_\lambda(\vec{a(\lambda)}))$ est la distance de $\vec{x}$ à l'image de la source S sur l'objet E à l'état de référence le long du rayon virtuel R', en projection sur le plan de la trajectoire T, et $\vec{n}(\Gamma^{-1}(\vec{x}_0),\lambda)$ est la direction orthogonale à la droite acquise à l'instant $\lambda$ passant par $\Gamma^{-1}(\vec{x}_0)$ sur ce plan. Enfin, on a vu que $q\left(\lambda,\Gamma_z^{-1}(\vec{x}_o)\right)$ est la cote sur le réseau de détecteurs D de la droite, acquise à l'instant $\lambda$, passant par le point mobile correspondant à $\vec{x}_0$.

Un procédé particulier, décrit dans le brevet français d'abord déposé sous le numéro 01 07918, peut encore être appliqué ici moyennant quelques transformations. Ce procédé s'applique à des acquisitions rapides menées autour de l'objet en faisant plusieurs tours et consiste en une reconstruction de l'objet animé en évaluant son contenu par des blocs de projections prises sur une fraction de tour seulement de la source. Les inversions de projections menées sur les blocs produisent des sous-images qui sont incorrectes puisqu'elles ne comprennent qu'une partie des mesures, mais sont obtenues très rapidement et permettent d'obtenir avec une même rapidité la loi de déplacement ou de déformation de l'objet en comparant des sous images homologues, prises pour des mêmes positions de sources espacées d'un tour complet ou d'un demi-tour ; les sous-images sont reconstruites à un instant de référence pour chacun des groupes de blocs et finalement combinées entre elles pour donner l'image complète de l'objet. Ici, les limites des blocs sont données dans la géométrie virtuelle. Le procédé n'est pas par ailleurs modifié.

Enfin, il est possible d'améliorer le procédé pour l'étude d'un objet soumis à des phénomènes périodiques. On sélectionne alors comme blocs d'étude seulement ceux qui sont pris à des phases du phénomène analogues à celles de l'instant de référence.

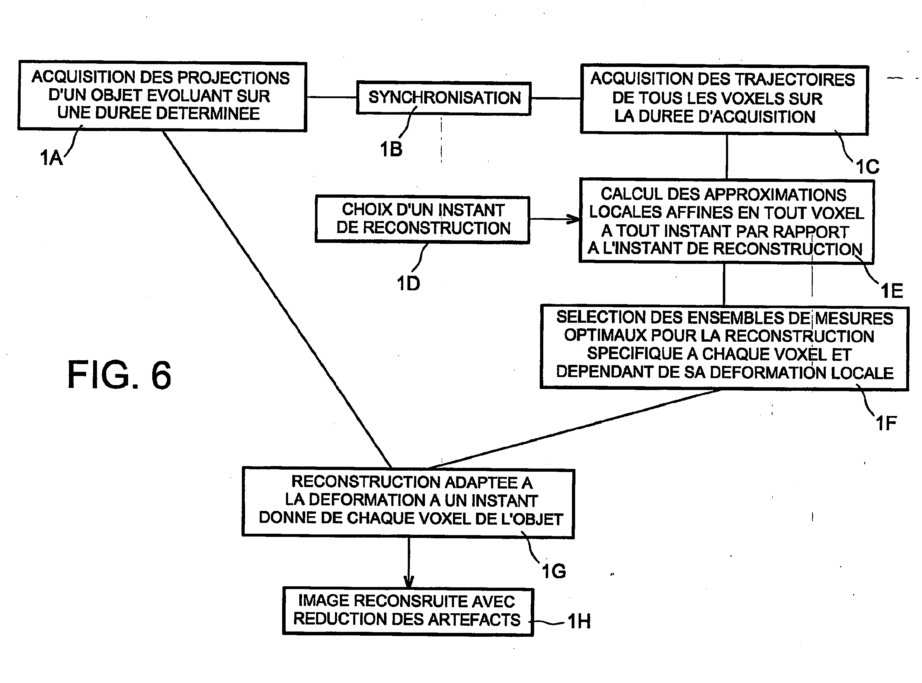

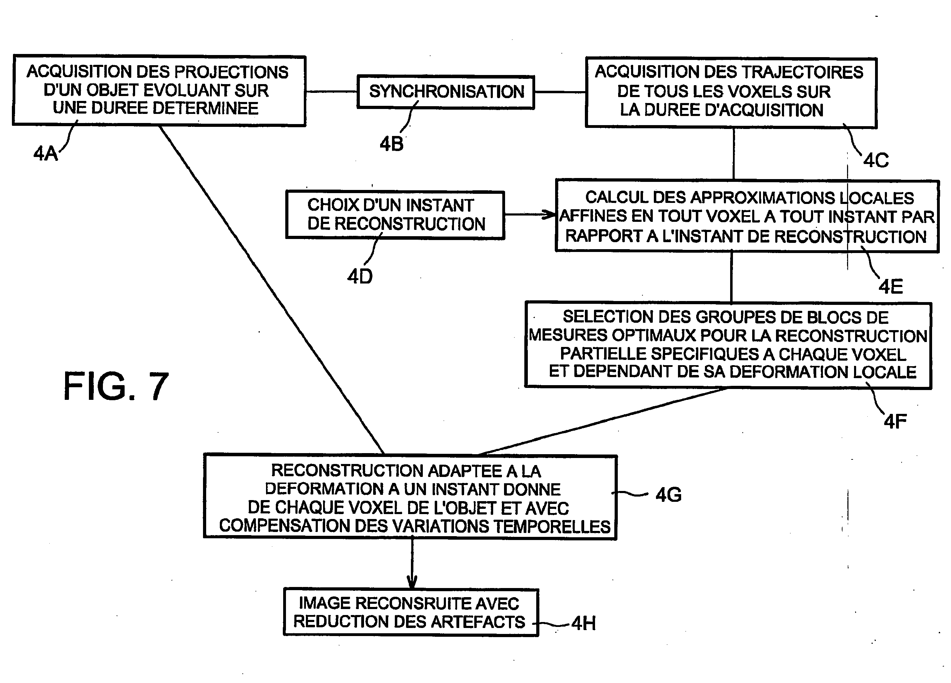

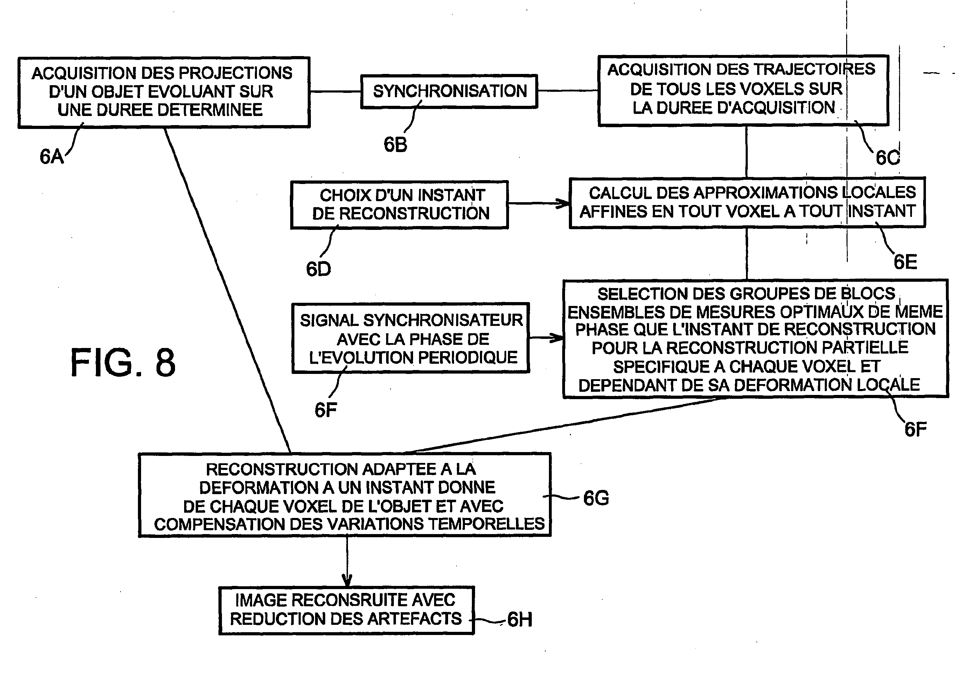

On pourra se reporter aux organigrammes des figures 6, 7 et 8 pour finir de prendre connaissance de l'invention. Ils détaillent trois modes de réalisation de l'invention, où la reconstruction est faite respectivement avec compensation du mouvement ; compensation du mouvement et compensation temporelle ; et compensation du mouvement, compensation temporelle et prise en compte d'une périodicité de l'évolution de l'objet. Ce qui a été décrit auparavant est appliqué dans ces procédés. Les voxels sont évidemment les points de l'image de l'objet qu'on considère dans l'image reconstruite.

**Revendications**

1.  Procédé de reconstruction d'une image tomographique d'un objet mobile et déformable, l'image étant un ensemble de valeurs d'une propriété prises par l'objet à une collection de points de l'objet, comprenant l'emploi : d'un rayonnement divergent à partir d'un foyer et traversant l'objet, le foyer étant mobile autour de l'objet ; d'un modèle analytique de mobilité et de déformation de l'objet défini pour chaque position du foyer ; et d'un procédé de calcul analytique pour obtenir lesdites valeurs à partir de sommes des valeurs de la propriété le long de lignes de projection menant au foyer et passant respectivement par les points ; **caractérisé en ce que** le modèle est affine, et est une combinaison variable en cours d'acquisition, cette combinaison comprenant des translations, des rotations et des homothéties de l'objet à partir d'une origine, et **en ce que** le procédé de calcul analytique comprend les étapes suivantes :

    - pondération des mesures, cette pondération étant dépendante du modèle analytique de mobilité et de déformation de l'objet ;
    - dérivation des mesures pondérées suivant la trajectoire du foyer en considérant une direction adaptée au modèle, cette direction étant maintenue constante, et obtention de mesures modifiées ;
    - rétroprojection des mesures modifiées.

2.  Procédé de reconstruction- d'une image tomographique selon la revendication 1, **caractérisé en ce qu'**il comprend une étape de définition d'intervalle d'intégration donnant $f_0(\vec{x}_0)$ de façon que les lignes de projection aient des directions s'étendant sur un intervalle de N demi-tours considéré dans un état de l'objet où l'image est reconstruite, N étant supérieur ou égal à 1.

3.  Procédé de reconstruction d'une image selon l'une quelconque des revendications 1 ou 2, **caractérisé en ce qu'**il est appliqué avec un modèle analytique de mobilité et de déformation particulier à chaque point de l'objet.

4.  Procédé de reconstruction d'une image selon la revendication 3, **caractérisé en ce que** la partie linéaire affine du modèle analytique particulier correspond à l'approximation locale affine d'une famille de trajectoires passant par des points situés au voisinage de chaque point.

5.  Procédé de reconstruction d'une image selon les revendications 2 et 3, **caractérisé en ce que** les directions des lignes de projection sont considérées au point de l'objet où le procédé est appliqué.

6.  Procédé de reconstruction d'une image selon l'une quelconque des revendications 1 à 5, **caractérisé en ce que** la reconstruction s'effectue d'abord par sous-images construites avec des lignes de projections ayant des directions comprises dans les intervalles angulaires plus petits qu'un demi-tour, **en ce qu'**il comprend- une étape de détermination des intervalles angulaires auxquels appartiennent les lignes de projections et **en ce qu'**il comprend une étape de combinaison des sous-images après correction de la loi d'évolution générale de l'objet entre les positions associées à différents instants de référence associés à chaque intervalle angulaire.

7.  Procédé de reconstruction d'une image selon l'une quelconque des revendications précédentes, **caractérisé en ce que** la loi d'évolution générale de l'objet est périodique et **en ce que** les instants de référence sont choisis pour la même phase des périodes de mouvement de l'objet.

8.  Procédé de reconstruction d'une image selon l'une quelconque des revendications précédentes, où le rayonnement est conique, **caractérisé en ce qu'**avant l'étape de filtrage des mesures acquises, le procédé comprend une étape de pondération des mesures acquises adaptée à une acquisition des mesures en géométrie conique et **en ce que** la rétroprojection est effectuée selon la géométrie conique en tenant compte du modèle analytique de mobilité et de déformation de l'objet.

9.  Procédé de reconstruction d'une image selon l'une quelconque des revendications précédentes, **caractérisé en ce que** la pondération des mesures et précédée par un filtrage des mesures acquises par un filtre de Hilbert.

10. Procédé de reconstruction d'une image selon l'une quelconque des revendications précédentes, **caractérisé en ce que** le modèle affine est obtenu par approximation de déformations réelles de l'objet selon un critère d'approximation.

**EP 1 639 551 B1**

**Claims**

1. A process for reconstruction of a tomographic image of a mobile and deformable object, the image being a set of values of a property taken by points of the object, comprising the use of: divergent radiation from a focal point and passing through the object, the focal point being mobile about the object; an analytical model of mobility and deformation of the object defined for each position of the focal point; and an analytical calculation process for obtaining said values from totals of the values of the property along projection lines leading to the focal point and passing respectively by the points; **characterized in that** the model is improved, and is a variable combination being acquired, this combination comprising translations, rotations and homotheties of the object from an origin, and **in that** the process of analytical calculation comprises the following stages:

   - weighting of the measurements, this weighting being dependent on the analytical model of mobility and deformation of the object;
   - derivation of the measurements weighted following the trajectory of the focal point considering a direction adapted to the model, this direction being kept constant, and obtaining modified measurements;
   - retroprojection of the modified measurements.

2. The process for reconstruction of an image claimed in claim 1, **characterized in that** it comprises a step of integration interval definition giving $f_0\left(\overrightarrow{x_0}\right)$ such that the projection lines have directions extending over an interval of N semi-turns considered in a state of the object where the image is reconstructed, N being greater than or equal to 1.

3. The process for reconstruction of an image as claimed in any one of Claims 1 or 2, **characterised in that** it is applied with a particular analytical mobility and deformation model at each point of the object.

4. The process for reconstruction of an image as claimed in Claim 3, **characterised in that** the improved linear part of the particular analytical model corresponds to the improved local approximation of a family of trajectories passing through points located in the region of each point.

5. The process for reconstruction of an image as claimed in Claims 2 and 3, **characterised in that** the directions of the projection lines are considered at the point of the object where the process is applied.

6. The process for reconstruction of an image as claimed in any one of Claims 1 to 5, **characterised in that** reconstruction is carried out first by sub-images constructed with projection lines having directions in the angular intervals smaller than a semi-turn, **in that** it comprises a stage of determining the angular intervals to which the projection lines belong, and **in that** it comprises a stage of combining the sub-images after correction of the general law of evolution of the object between the positions associated with different reference instants associated with each angular interval.

7. The process for reconstruction of an image as claimed in any one of the preceding claims, **characterised in that** the general law of evolution of the object is periodical and **in that** the reference instants are selected for the same phase of periods of movement of the object.

8. The process for reconstruction of an image as claimed in any one of the preceding claims, where radiation is conical, **characterised in that** prior to the step of filtering the acquired measurements, the process comprises a stage of weighting the acquired measurements adapted to acquisition of the measurements in conical geometry and **in that** the retroprojection is performed according to the conical geometry by taking into consideration the analytical model of mobility and deformation of the object.

9. The process for reconstruction of an image as claimed in any one of the preceding claims, **characterised in that** weighting of the measurements is preceded by filtering the measurements acquired by a Hilbert filter.

10. The process for reconstruction of an image as claimed in any one of the preceding claims, **characterised in that** the improved model is obtained by approximation of real deformations of the object according to an approximation criterion.

**EP 1 639 551 B1**

**Patentansprüche**

1. Verfahren zur Rekonstruktion eines tomographischen Bilds eines mobilen und deformierbaren Objekts, wobei das Bild ein Satz von Werten einer Eigenschaft ist, die durch das Objekt aus einer Menge von Punkten des Objekts angenommen werden, umfassend die Verwendung einer aus einem Brennpunkt auseinanderlaufenden und durch das Objekt hindurchgehenden Strahlung, wobei der Brennpunkt um das Objekt beweglich ist; eines analytischen Modells der für jede Position des Brennpunkts definierten Mobilität und Deformation des Objekts und eines analytischen Rechenverfahrens zum Erhalten der Werte aus Summen der Werte der Eigenschaft entlang zum Brennpunkt führender und durch die Punkte hindurchgehender Projektionslinien, **dadurch gekennzeichnet, daß** das Modell affin ist und während der Erfassung eine variable Kombination ist, wobei diese Kombination Translationen, Rotationen und Homothetien des Objekts von einem Ursprung aus umfaßt, und **dadurch**, daß das analytische Rechenverfahren die folgenden Schritte umfaßt:

   - Gewichtung der Messungen, wobei diese Gewichtung vom analytischen Modell der Mobilität und Deformierbarkeit des Objekts abhängt;
   - Ableitung der gewichteten Messungen unter Folgen der Bahn des Brennpunkts unter Berücksichtigung einer an das Modell angepaßten Richtung, wobei diese Richtung konstant gehalten wird, und Erhalten modifizierter Messungen;
   - Rückprojektion der modifizierten Messungen.

2. Verfahren zur Rekonstruktion eines tomographischen Bilds gemäß Anspruch 1, **dadurch gekennzeichnet, daß** es einen Schritt der Definition eines $f_0(\vec{x}_0)$ ergebenden Integrationsintervalls umfaßt, so daß die Projektionslinien Richtungen aufweisen, die sich über ein Intervall von N Umkehrungen erstrecken, unter Berücksichtigung, daß bei einem Zustand des Objekts, wo das Bild rekonstruiert wird, N größer als oder gleich 1 ist.

3. Verfahren zur Rekonstruktion eines Bilds gemäß einem der Ansprüche 1 oder 2, **dadurch gekennzeichnet, daß** es an jedem Punkt des Objekts mit einem eigenen analytischen Modell der Mobilität und der Deformation angewendet wird.

4. Verfahren zur Rekonstruktion eines Bilds gemäß Anspruch 3, **dadurch gekennzeichnet, daß** der affine lineare Teil des eigenen analytischen Modells der affinen lokalen Näherung einer Familie von Bahnen entspricht, die durch in der Umgebung jedes Punkts gelegene Punkte hindurchgeht.

5. Verfahren zur Rekonstruktion eines Bilds gemäß Anspruch 2 und 3, **dadurch gekennzeichnet, daß** die Richtungen der Projektionslinien als Punkt des Objekts betrachtet werden, worauf das Verfahren angewendet wird.

6. Verfahren zur Rekonstruktion eines Bilds gemäß einem der Ansprüche 1 bis 5, **dadurch gekennzeichnet, daß** die Rekonstruktion zuerst durch Teilbilder bewerkstelligt wird, die mit Projektionslinien mit Richtungen in kleineren Winkelintervallen als eine Umkehrung konstruiert wurden, **dadurch**, daß es einen Schritt der Bestimmung der Winkelintervalle, zu denen die Projektionslinien gehören, umfaßt und **dadurch**, daß es einen Schritt der Kombination der Teilbilder nach einer Korrektur gemäß dem allgemeinen Evolutionsgesetz des Objekts zwischen den Positionen umfaßt, die mit unterschiedlichen, mit jedem Winkelintervall verbundenen Referenzinstanzen verbunden sind.

7. Verfahren zur Rekonstruktion eines Bilds gemäß einem der vorangehenden Ansprüche, **dadurch gekennzeichnet, daß** das allgemeine Evolutionsgesetz des Objekts periodisch ist und **dadurch**, daß die Referenzinstanzen für dieselbe Phase von Perioden der Bewegung des Objekts gewählt werden.

8. Verfahren zur Rekonstruktion eines Bilds gemäß einem der vorangehenden Ansprüche, wobei die Strahlung kegelförmig ist, **dadurch gekennzeichnet, daß** vor dem Schritt des Filterns der erfaßten Messungen das Verfahren einen Schritt der Gewichtung der erfaßten Messungen umfaßt, der an das Erfassen von Messungen bei konischer Geometrie angepaßt ist und **dadurch**, daß die Rückprojektion gemäß der kegelförmigen Geometrie unter Berücksichtigung des analytischen Modells der Mobilität und Deformation des Objekts ausgeführt wird.

9. Verfahren zur Rekonstruktion eines Bilds gemäß einem der vorangehenden Ansprüche, **dadurch gekennzeichnet, daß** dem Gewichten der Messungen ein Filtern der erfaßten Messungen durch ein Hilbert-Filter vorangeht.

10. Verfahren zur Rekonstruktion eines Bilds gemäß einem der vorangehenden Ansprüche, **dadurch gekennzeichnet, daß** das affine Modell durch Näherung reeller Deformationen des Objekts gemäß einem Näherungskriterium erhalten wird.

FIG. 1

FIG. 2

FIG. 3a

FIG. 3b

FIG. 3c

FIG. 4

FIG. 5

**FIG. 6**

ACQUISITION DES PROJECTIONS D'UN OBJET EVOLUANT SUR UNE DUREE DETERMINEE

1A

SYNCHRONISATION

1B

ACQUISITION DES TRAJECTOIRES DE TOUS LES VOXELS SUR LA DUREE D'ACQUISITION

1C

CHOIX D'UN INSTANT DE RECONSTRUCTION

1D

CALCUL DES APPROXIMATIONS LOCALES AFFINES EN TOUT VOXEL A TOUT INSTANT PAR RAPPORT A L'INSTANT DE RECONSTRUCTION

1E

SELECTION DES ENSEMBLES DE MESURES OPTIMAUX POUR LA RECONSTRUCTION SPECIFIQUE A CHAQUE VOXEL ET DEPENDANT DE SA DEFORMATION LOCALE

1F

RECONSTRUCTION ADAPTEE A LA DEFORMATION A UN INSTANT DONNE DE CHAQUE VOXEL DE L'OBJET

1G

IMAGE RECONSRUITE AVEC REDUCTION DES ARTEFACTS ── 1H

EP 1 639 551 B1

EP 1 639 551 B1

**FIG. 7**

```
┌─────────────────────────────┐      ┌──────────────────┐      ┌─────────────────────────────┐
│ ACQUISITION DES PROJECTIONS │      │                  │      │ ACQUISITION DES TRAJECTOIRES│
│ D'UN OBJET EVOLUANT SUR     │──────│ SYNCHRONISATION  │──────│ DE TOUS LES VOXELS SUR      │
│ UNE DUREE DETERMINEE        │      │                  │      │ LA DUREE D'ACQUISITION      │
└─────────────────────────────┘      └──────────────────┘      └─────────────────────────────┘
        4A                                  4B                            4C
```

CHOIX D'UN INSTANT DE RECONSTRUCTION

4D

CALCUL DES APPROXIMATIONS LOCALES AFFINES EN TOUT VOXEL A TOUT INSTANT PAR RAPPORT A L'INSTANT DE RECONSTRUCTION

4E

SELECTION DES GROUPES DE BLOCS DE MESURES OPTIMAUX POUR LA RECONSTRUCTION PARTIELLE SPECIFIQUES A CHAQUE VOXEL ET DEPENDANT DE SA DEFORMATION LOCALE

4F

RECONSTRUCTION ADAPTEE A LA DEFORMATION A UN INSTANT DONNE DE CHAQUE VOXEL DE L'OBJET ET AVEC COMPENSATION DES VARIATIONS TEMPORELLES

4G

IMAGE RECONSRUITE AVEC REDUCTION DES ARTEFACTS

4H

**FIG. 8**

ACQUISITION DES PROJECTIONS D'UN OBJET EVOLUANT SUR UNE DUREE DETERMINEE

6A

SYNCHRONISATION

6B

ACQUISITION DES TRAJECTOIRES DE TOUS LES VOXELS SUR LA DUREE D'ACQUISITION

6C

CHOIX D'UN INSTANT DE RECONSTRUCTION

6D

CALCUL DES APPROXIMATIONS LOCALES AFFINES EN TOUT VOXEL A TOUT INSTANT

6E

SIGNAL SYNCHRONISATEUR AVEC LA PHASE DE L'EVOLUTION PERIODIQUE

6F

SELECTION DES GROUPES DE BLOCS ENSEMBLES DE MESURES OPTIMAUX DE MEME PHASE QUE L'INSTANT DE RECONSTRUCTION POUR LA RECONSTRUCTION PARTIELLE SPECIFIQUE A CHAQUE VOXEL ET DEPENDANT DE SA DEFORMATION LOCALE

6F

RECONSTRUCTION ADAPTEE A LA DEFORMATION A UN INSTANT DONNE DE CHAQUE VOXEL DE L'OBJET ET AVEC COMPENSATION DES VARIATIONS TEMPORELLES

6G

IMAGE RECONSRUITE AVEC REDUCTION DES ARTEFACTS

6H

EP 1 639 551 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5287276 A